# EUROPÄISCHE PATENTSCHRIFT

(11) **EP 0 335 858 B1**
(45) Veröffentlichungstag und Bekanntmachung des Hinweises auf die Patenterteilung: **13.10.1993**
(21) Anmeldenummer: 89890072.5
(22) Anmeldetag: 14.03.1989
(51) Int. Cl.: B23K 11/00, B21F 27/10

(54) **Vielpunkt-Schweissmaschine**
Multi-spot welding machine
Machine à souder à plusieurs points

(30) Priorität: 31.03.1988 AT 860/88
(43) Veröffentlichungstag der Anmeldung: 04.10.1989
(73) Patentinhaber: EVG Entwicklungs- u. Verwertungs- Gesellschaft m.b.H., A-8074 Raaba (AT)
(72) Erfinder: Ritter, Gerhard, Dr. Dipl.-Ing., A-8043 Graz (AT); Ritter, Klaus, Dipl.-Ing., A-8042 Graz (AT); Scherr, Rudolf, Dipl.-Ing., A-8045 Graz (AT); Jursche, Kurt, A-8010 Graz (AT)
(74) Vertreter: Holzer, Walter, Dipl.-Ing.

(56) Entgegenhaltungen:
- AT-B- 264 992
- AT-B- 365 492
- DE-B- 2 901 741

## Beschreibung

Die Erfindung betrifft eine nach der elektrischen Widerstandsmethode arbeitende Vielpunkt-Schweißmaschine zum Herstellen von Gittern oder Gitterrosten, mit je einer Querreihe von Elektroden auf beiden Seiten der Schweißebene und zumindest einem Schweißtransformator auf einer Seite dieser Ebene, wobei die Schweißebene durchsetzende elektrisch leitende Verbindungen vom Schweißtransformator zu den auf der ihm abgekehrten Seite der Schweißebene liegenden Elektroden vorgesehen sind und über die Elektroden wahlweise Einzelpunkt- oder Doppelpunktschweißstrecken herstellbar sind, wobei die Zuleitung vom Schweißtransformator zu jeweils einer der beiden durch die Strombrücke in eine Doppelpunktschweißstrecke einbezogenen Elektroden auf der dem Schweißtransformator zugekehrten Seite der Schweißebene umpolbar ist.

Bei einer aus der AT-B-365.492 bekannten Schweißmaschine dieser Gattung, die zur Erzeugung von Gittern mit unterschiedlicher Maschenweite dient, sind beiderseits der Schweißebene Querreihen von ortsfesten Elektroden angeordnet. Der Abstand der Elektroden entspricht dabei der kleinstmöglichen Maschenweite.

Die Änderung der Maschenweite erfolgt bei der bekannten Maschine, ausgehend von einer Einzelpunktschweißung bei der kleinsten Maschenweite, durch Übergang auf Doppelpunktschweißung bei Maschenweiten, die ein Vielfaches der kleinsten Maschenweite betragen, auf rein schaltungstechnischem Wege, wobei die Schweißebene ständig von den starren Verbindungen durchsetzt ist, so daß zwischen den Elektroden in Längsdraht-Vorschubrichtung nur eine Längsdrahtschar, nicht aber vorgefertigte Rahmen eingeführt werden können, wie dies erwünscht ist, wenn Rahmengitter oder Gitterroste erzeugt werden sollen.

Die vorliegende Erfindung zielt nun darauf ab, eine Schweißmaschine der einleitend angegebenen Gattung zu schaffen, die einerseits auf konstruktiv einfache Weise bei der Einzelpunktschweißung eine große Flexibilität hinsichtlich verschiedener Durchmesserkombinationen von Längs- und Querdrähten sowie Drahtteilungen ermöglicht, und anderseits eine Doppelpunktschweißung mit bekanntermaßen erhöhter Wirtschaftlichkeit erlaubt, dabei aber im Falle der Doppelpunktschweißung auch das Zuführen von vorgefertigten Rahmen ermöglicht, auf welche Drähte aufgeschweißt werden.

Die erfindungsgemäße Maschine zeichnet sich dadurch aus, daß zum Übergang von Einzelpunktschweißung auf Doppelpunktschweißung die die Schweißebene durchsetzenden elektrisch leitenden Verbindungen demontierbar und ausgewählte Elektroden auf der dem Schweißtransformator abgekehrten Seite der Schweißebene paarweise durch Strombrücken verbindbar sind.

Die erfindungsgemäße Schweißmaschine gestattet auf einfache Weise eine Anpassung der Maschine an verschiedene Anforderungen und insbesondere eine Entfernung der die Schweißebene durchsetzenden Verbindungen, so daß fertig vorbereitete, gegebenenfalls schon mit einer Drahtschar verschweißte Rahmen, z.B. Drahtrahmen oder Profilrahmen sowie flache Blechrahmen zugeführt und mit Längs- und/oder Querdrähten verschweißt werden können.

Bei einer bevorzugten Ausführungsform der Erfindung mit zur Änderung der Längsdrahtteilung in Querrichtung der Maschine verschiebbaren Elektrodenhaltern sind paarweise zusammenwirkende Elektroden auf beiden Seiten der Schweißebene tragende Elektrodenhalter zur gemeinsamen Verstellung vorzugsweise durch einen durch Absenken der oberen Elektrode auf die untere Elektrode erzeugten Reibungsschluß und/oder ein Kupplungselement mechanisch miteinander kuppelbar, wobei einer der beiden Elektrodenhalter jedes Elektrodenpaares ein demontierbares, die Schweißebene durchsetzendes Verbindungsstück enthält. Hiedurch werden die Einstellung der gewünschten Längsdrahtteilung und die Demontage der die Schweißebene durchsetzenden Verbindungen erleichtert.

Nach einem weiteren Merkmal der Erfindung sind die demontierbaren Verbindungsstücke starr ausgebildet und einerseits mit den zugeordneten Elektroden, anderseits über je einen flexiblen Leiter mit zugeordneten Stromabnehmern einer Stromschiene verbunden. Vorzugsweise sind auch die auf der gleichen Seite der Schweißebene wie der Schweißtransformator angeordneten Elektroden mittels je eines flexiblen Leiters mit zugeordneten Stromabnehmern einer Stromschiene verbunden. Vorteilhaft ist jede Elektrode auf der dem Schweißtransformator zugekehrten Seite der Schweißebene nach Demontage des die Schweißebene durchsetzenden Verbindungsstückes mittels des flexiblen Leiters mit einem einer Nachbarelektrode auf der gleichen Seite der Schweißebene zugeordneten Stromabnehmer einer Stromschiene verbindbar.

Gemäß einer Weiterbildung der Erfindung sind alle Elektroden auf der einen Seite der Schweißebene zwecks Öffnung des Elektrodenspaltes und Justierung desselben und alle Elektroden auf der gegenüberliegenden Seite der Schweißebene zwecks Öffnung des Elektrodenspaltes und Erzeugung des Schweißdruckes in Richtung senkrecht zur Schweißebene verstellbar.

Im Rahmen der Erfindung sind der Schweißtransformator und die ihm zugeordneten Stromschienen vorteilhaft unterhalb der Schweißebene angeordnet und es ist zur Grundeinstellung der Elektroden auf eine vorbestimmte Schweißgutdicke ein die Elektroden bzw. Elektrodenhalter oberhalb der Schweißebene tragender Elektrodenbalken, vorzugsweise mittels eines Exzenters, verstellbar. Hiebei kann ferner der obere Elektrodenbalken bei jedem Vorschubschritt der Maschine anhebbar sein und es können vorzugsweise die Elektroden unterhalb der Schweißebene gleichzeitig absenkbar sein, um eine Querdrahtzufuhr sowohl an der Oberseite als auch an der Unterseite der Längsdrahtschar zu ermöglichen.

Nach einem anderen Erfindungsmerkmal sind die Elektrodenhalter einer der beiden Reihen von Elektroden oder die paarweise gekuppelten Elektrodenhalter auf einer in Querrichtung der Maschine verlaufenden Fahrschiene verfahrbar abgestützt. Dabei erweist es sich als vorteilhaft, wenn zwei parallele Schienen vorgesehen sind und wenn in Querrichtung einander benachbarte Elektrodenhalter abwechselnd auf einer der Schienen verfahrbar sind.

Die Erfindung und weitere Merkmale derselben werden nachfolgend an einem Ausführungsbeispiel unter Bezugnahme auf die Zeichnungen näher erläutert. Es zeigen:
Fig. 1 eine teilweise geschnittene schematische Seitenansicht des gesamten Elektrodensystems einer Schweißmaschine gemäß der Erfindung, wobei die oberen und unteren Elektroden eine Kupplungsstellung einnehmen, welche eine Elektrodenverschiebung zwecks Änderung der Längsdrahtteilung erleichtert,
Fig. 2 eine analoge Seitenansicht, wobei sich die Elektroden in der Schweißstellung befinden und die Ansicht durch die Längs- und Querdrahtzubringer sowie durch Rahmenzubringer ergänzt ist, die
Fig. 3a und 3b im Detail in einer schematischen Seitenansicht und einer Vorderansicht die Einstellung der Maschine auf Einzelpunktschweißung, und die
Fig. 4a und 4b in einer analogen Seitenansicht und Vorderansicht die Umstellung der Maschine auf Doppelpunktschweißung.

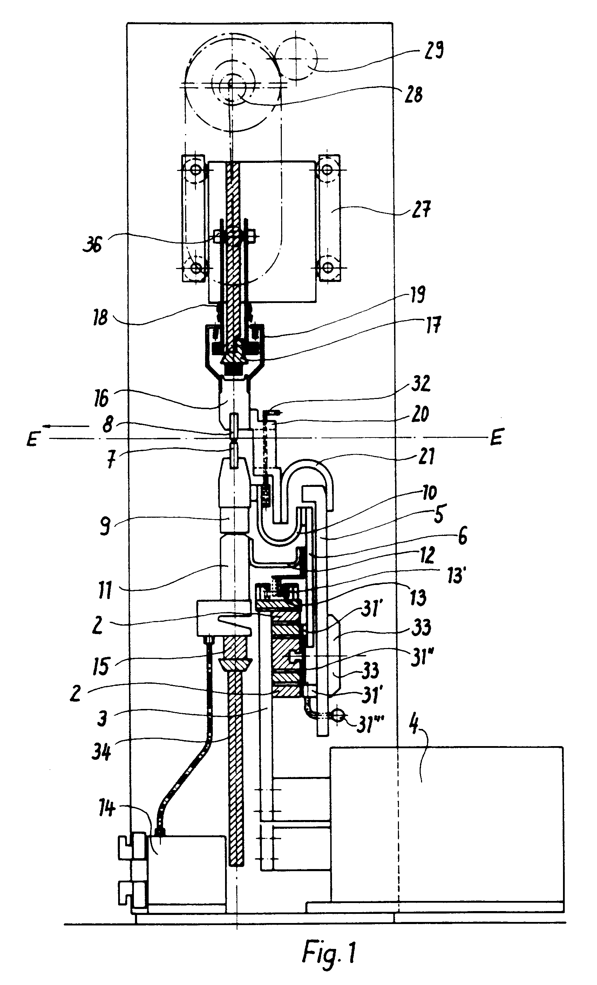

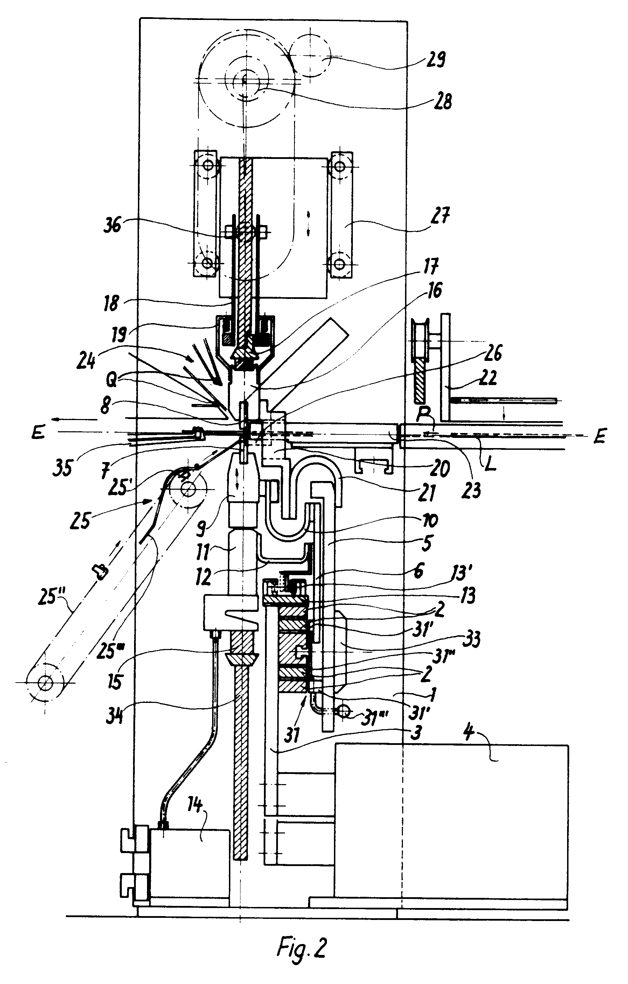

Bei der in den Fig. 1 und 2 dargestellten Schweißmaschine werden vom Maschinengestell 1 vier Stromschienen 2 abgestützt, die gegeneinander und gegen das Maschinengestell elektrisch isoliert und quer zur Längsdraht-Vorschubrichtung angeordnet sind. Die Stromschienen 2 sind über Leiter 3 mit zumindest einem, vorzugsweise aber mehreren zugeordneten Schweißtransformatoren 4 verbunden. Längs der Stromschienen 2 sind Paare von Stromabnehmern 5, 6 verschiebbar, die mit je einer Stromschiene Kontakt geben und in ausgewählten Lagen fixierbar sind. Diese Stromabnehmer 5, 6 stehen mit beiderseits der Schweißebene E-E in Querreihen angeordneten Elektroden 7, 8 in Verbindung. Die unterhalb der Schweißebene E-E liegenden Elektroden 7 sitzen in zugeordneten Elektrodenhaltern 9, an denen je ein flexibles Stromband 10 des zugeordneten Stromabnehmers 6 fixiert ist. Jeder Elektrodenhalter 9 wird auf seiner Unterseite von einem vertikalen Hydraulikzylinder 11 beaufschlagt, der über einen Bügel 12, an dem auch der zugehörige Stromabnehmer 6 elektrisch isoliert befestigt ist, auf einer maschinenfesten, oberhalb der Stromschienen 2 zu diesen parallelen Schiene 13 mittels Rollen 13′ querverfahrbar geführt ist. Der Hydraulikzylinder 11 steht mit einem Hydraulikventil 14 in Verbindung und ist nach unten auf einer gestellfesten Gleitschiene 15 fest abgestützt.

Die oberhalb der Schweißebene E-E in einer Querreihe angeordneten Elektroden 8 sitzen in Elektrodenhaltern 16, die durch einen in vertikaler Richtung bewegbaren Klemmbacken 18 und federnd vorgespannte Bügel 19 an einem Elektrodenbalken 17 festgehalten sind. Der Elektrodenhalter 16 ist über ein die Schweißebene E-E durchsetzendes starres Verbindungsstück 20 mit einem flexiblen Stromband 21 verbunden, das an einem zugeordneten Stromabnehmer 5 befestigt ist.

Gemäß Fig. 2 werden die Längsdrähte L aus einem Längsdraht-Lademagazin 22 über Längsdrahtzuführungen 23 der Schweißlinie der Gitterschweißmaschine in Richtung des Pfeiles P zugeführt. Querdrähte Q werden der Schweißlinie auf der Auslaufseite der Schweißmaschine aus nicht dargestellten Vorratsmagazinen über zumindest eine obere Querdrahtzuführung 24 oder über zumindest eine untere Querdrahtzuführung 25, oder sowohl aus der oberen als auch aus der unteren Querdrahtzuführung 24 bzw. 25 bis gegen einen Querdrahtanschlag 26 zugeführt, der zwecks Fixierung der Querdrähte Q in der Schweißposition als Haltemagnet ausgebildet ist. Die obere Querdrahtzuführung 24 führt den Querdraht Q unter Schwerkraft und gegebenenfalls mit Hilfe zusätzlicher mechanischer Zuführelemente zu. Die untere Querdrahtzuführung 25 besteht beim gezeigten Beispiel aus einer angetriebenen Querdraht-Förderkette 25˝, Leit- und Führungselementen 25˝′ und aus einem Luftzubringer 25′, der die Querdrähte Q entgegen der Schwerkraft pneumatisch bis zum Querdrahtanschlag befördert. Querdrahtzuführungen dieser Art sind an sich bekannt und brauchen deshalb nicht näher erläutert zu werden; sie ermöglichen die Zufuhr von Querdrähten unterschiedlichen Durchmessers und unterschiedlicher Länge.

Der obere Elektrodenbalken 17 ist in einer vertikalen Rollenführung 27 geführt und wird mittels eines Exzenters 28, der über einen Antrieb 29 angetrieben wird, im Takt der Schweißmaschine in entsprechende Hubbewegungen versetzt, um die oberen Elektrodenhalter 16 mit den zugehörigen Schweißelektroden 8 jeweils so weit zu lüften, daß in der obersten Position der Elektroden der obere Querdraht Q der Schweißlinie ungehindert zugeführt werden kann. In der tiefsten Position der Elektroden ist die Lage der Längsdrähte L und Querdrähte Q zum gegenseitigen Verschweißen genau definiert. Vorzugsweise werden zugleich mit dem Anheben der oberen Elektroden 8 auch die Elektroden 7 unterhalb der Schweißebene in einem vorbestimmten Ausmaß abgesenkt, um eine ausreichende Elektrodenspaltöffnung zu erzielen.

In der eingefahrenen Position jedes Hydraulikzylinders 11 ist der untere Elektrodenhalter 9 entsprechend abgesenkt, um die Zuführung eines unteren Querdrahtes Q zu ermöglichen. Durch Steuerung des Hydraulikzylinders beim Ausfahren wird der Schweißdruck entsprechend den Durchmessern der zu verschweißenden Drähte eingestellt. Das Hydraulikventil 14 steuert den Zylinder 11 überdies im Arbeitstakt der Schweißmaschine.

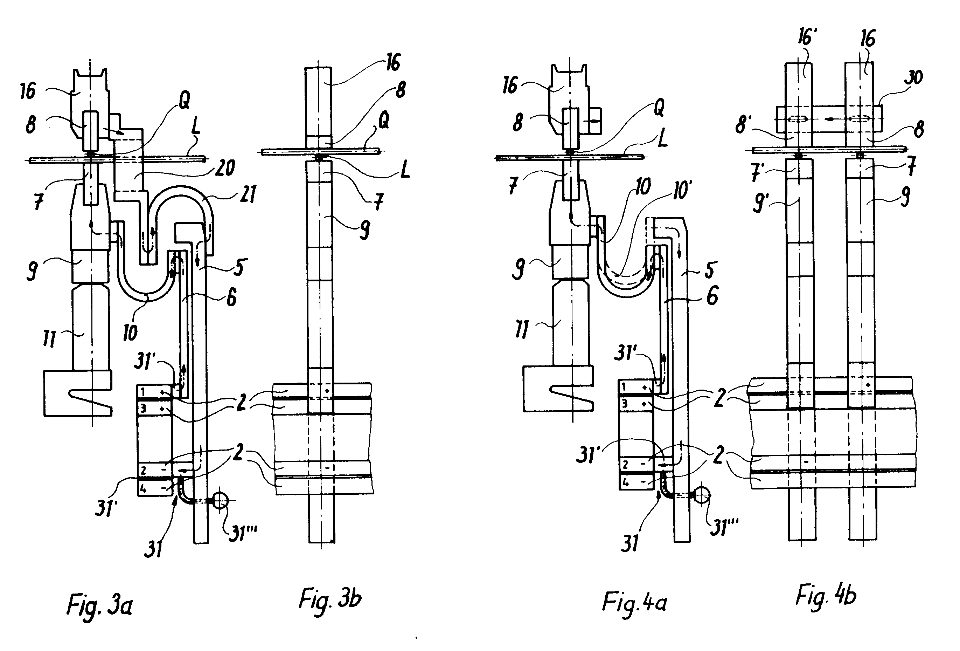

Im Falle der sogenannten Einzelpunktschweißung besteht, wie die Fig. 3a und 3b zeigen, für jedes bei der Schweißung zusammenwirkende Elektrodenpaar 7, 8 die elektrische Verbindung zwischen dem oberen Elektrodenhalter 16 und der entsprechenden Stromschiene 2 aus einem Stromabnehmer 5, einem Stromband 21 und einem starren Verbindungsstück 20.

Zur Durchführung der sogenannten Doppelpunktschweißung und zur Herstellung von Gittern aus vorgefertigten Draht-oder Blechrahmen und Längsdrähten bzw. Längs- und Querdrähten werden gemäß den Fig. 4a und 4b alle Strombänder 21 und Verbindungsstücke 20 entfernt und sodann werden je zwei benachbarte obere Elektrodenhalter 16, 16′ mit einer Strombrücke 30 verbunden. Diese Strombrücke 30 weist entsprechende Langlöcher auf, um den gegenseitigen Abstand der oberen Elektrodenhalter 16 der gewünschten Längsdrahtteilung anpassen zu können.

Im Falle der Einzelpunktschweißung besteht die elektrische Verbindung zwischen dem unteren Elektrodenhalter 9 bzw. der unteren Schweißelektrode 7 und der Stromschiene 2 aus einem zugeordneten Stromabnehmer 6 und einem flexiblen Stromband 10.

Zur Durchführung der Doppelpunktschweißung bleibt jeweils einer der beiden unteren Elektrodenhalter 9, 9′ wie bei der Einzelpunktschweißung über ein Stromband 10 mit einem zugeordneten Stromabnehmer 6 verbunden, wogegen das Stromband 10′ des zugehörigen benachbarten unteren Elektrodenhalters 9′ von dem bei der Einzelpunktschweißung zugeordneten gleichpoligen Stromabnehmer 6 gelöst und auf den gegenpoligen Stromabnehmer 5 ummontiert wird.

Die Stromabnehmer 5, 6 sind über Schieber 31 mit den Stromschienen 2 verbunden, wodurch ein Umpolen der Stromabnehmer ermöglicht wird. Jeder Schieber 31 besteht im wesentlichen aus Kontaktstücken 31′, einem elektrisch isolierten Verbindungsstück 31˝ und einem Betätigungselement 31˝′.

Zur Änderung der Längsdrahtteilung wird gemäß Fig. 1 der obere Elektrodenhalter 16 mittels der in vertikaler Richtung bewegbaren Klemmbalken 18 gelüftet und die obere Elektrode 8 setzt auf der zugehörigen unteren Elektrode 7 auf. Der obere Elektrodenhalter 16 wird dann durch ein Kupplungselement 32, z.B. einen Zentrierstift, über das Verbindungsstück 20 mit dem unteren Elektrodenhalter 9 verbunden. Durch diese Kupplung und durch den Reibungsschluß sind beide Elektrodenhalter 9, 16 in ausreichendem Maße miteinander verbunden, um gemeinsam verfahren werden zu können. Zum Verfahren der miteinander verbundenen Elektrodenhalter 9, 16 wird ein den Schieber 31 an der Stromschiene 2 festklemmendes Element 33 gelöst. Das Verfahren der beiden Elektrodenhalter 9, 16 erfolgt über die Verfahreinrichtung, die aus der Gleitschiene 15, der Führungsschiene 13 und dem Bügel 12 mit den Laufrollen 13′ besteht.

Aus Platzgründen und um die Elektrodenhalter 9, 16 so eng wie möglich aneinanderreihen zu können, werden benachbarte Elektrodenhalter zueinander versetzt und auf zwei parallelen Fahrschienen 13 abgestützt, wie dies strichliert angedeutet ist. Die Gleitschiene 15 ist fest mit dem Ständer 34 des Maschinengestells verbunden, der seinerseits in nicht dargestellter Weise vom Gestell 1 und der Grundplatte der Maschine getragen wird.

Das geschweißte Gitter wird mittels Auszughaken 35 aus der Schweißlinie befördert. Zur Grundeinstellung der oberen Elektrodenhalter 16 kann der obere Elektrodenbalken 17 mittels einer Exzenter-Anstelleinrichtung 36 in der Höhe verstellt werden. Der obere Elektrodenbalken 17 ist überdies, wie schon erwähnt, bei jedem Vorschubschritt der Gitterschweißmaschine mittels des weiteren Exzenters 26 und einer zugeordneten Antriebseinrichtung 29 anhebbar, u.zw. so weit, daß eine ordnungsgemäße Zufuhr der Querdrähte Q zur Schweißlinie auch bei kleiner Querdrahtteilung gesichert ist, wobei zugleich die unteren Elektroden 7 mittels der Hydraulikzylinder 11 in einem gewissen Ausmaß abgesenkt werden können.

Die Schweißmaschine ist beim gezeigten Beispiel mit einem Magazin 22 für abgelängte Längsdrähte ausgestattet. Dieses Magazin kann im Rahmen der Erfindung durch ein nicht gezeigtes Magazin für vorbereitete Rahmen, beispielsweise Drahtrahmen oder flache Blechrahmen bzw. Profilrahmen ersetzt werden, wobei die Rahmen zum Aufschweißen von Querdrähten zur Herstellung von Rahmengittern für Schotterkörbe, Zäune u.dgl. dienen bzw. zur Herstellung von Gitterrosten für Kühlschränke od.dgl.. Mit der erfindungsgemäßen Maschine können insbesondere schmale Gitter bzw. Gitterroste hergestellt werden. Es können auch bereits mit einer Drahtschar verschweißte Rahmen zugeführt werden. Ferner können in Maschinenquerrichtung zwei oder mehr Magazine für Längsdrähte und/oder Rahmen vorgesehen werden, so daß auch eine zwei- oder mehrbahnige Herstellung gleicher oder unterschiedlicher Gitter möglich ist.

## Patentansprüche

1. Nach der elektrischen Widerstandsmethode arbeitende Vielpunkt-Schweißmaschine zum Herstellen von Gittern oder Gitterrosten, mit je einer Querreihe von Elektroden (7, 8) auf beiden Seiten der Schweißebene (E-E) und zumindest einem Schweißtransformator (4) auf einer Seite dieser Ebene, wobei die Schweißebene durchsetzende elektrisch leitende Verbindungen (20) vom Schweißtransformator (4) zu den auf der ihm abgekehrten Seite der Schweißebene liegenden Elektroden (8) vorgesehen sind und über die Elektroden (7, 8) wahlweise Einzelpunkt- oder Doppelpunktschweißstrecken herstellbar sind, wobei die Zuleitung (10) vom Schweißtransformator (4) zu jeweils einer der beiden durch die Strombrücke (30) in eine Doppelpunktschweißstrecke einbezogenen Elektroden (7) auf der dem Schweißtransformator zugekehrten Seite der Schweißebene umpolbar ist, dadurch gekennzeichnet, daß zum Übergang von Einzelpunktschweißung auf Doppelpunktschweißung die die Schweißebene (E-E) durchsetzenden, elektrisch leitenden Verbindungen (20) demontierbar und ausgewählte Elektroden (8) auf der dem Schweißtransformator (4) abgekehrten Seite der Schweißebene paarweise durch Strombrücken (30) verbindbar sind.

2. Schweißmaschine nach Anspruch 1, mit zur Änderung der Längsdrahtteilung in Querrichtung der Maschine verschiebbaren Elektrodenhaltern, dadurch gekennzeichnet, daß paarweise zusammenwirkende Elektroden (7, 8) auf beiden Seiten der Schweißebene (E-E) tragende Elektrodenhalter (9, 16) zur gemeinsamen Verstellung vorzugsweise durch einen durch Absenken der oberen Elektrode (8) auf die untere Elektrode (7) erzeugten Reibungsschluß und/oder ein Kupplungselement (32) mechanisch kuppelbar sind, wobei einer (16) der beiden Elektrodenhalter (9, 16) jedes Elektrodenpaares (7, 8) ein demontierbares, die Schweißebene (E-E) durchsetzendes Verbindungsstück (20) enthält.

3. Schweißmaschine nach den Ansprüchen 1 und 2, dadurch gekennzeichnet, daß die demontierbaren Verbindungsstücke (20) starr ausgebildet und einerseits mit den zugeordneten Elektroden (8), anderseits über je einen flexiblen Leiter (21) mit zugeordneten Stromabnehmern (5) einer Stromschiene (2) verbunden sind.

4. Schweißmaschine nach den Ansprüchen 1 bis 3, dadurch gekennzeichnet, daß auch die auf der gleichen Seite der Schweißebene (E-E) wie der Schweißtransformator (4) angeordneten Elektroden (7) mittels je eines flexiblen Leiters (10) mit zugeordneten Stromabnehmern (6) einer Stromschiene (2) verbunden sind.

5. Schweißmaschine nach den Ansprüchen 3 und 4, dadurch gekennzeichnet, daß jede Elektrode (7′) auf der dem Schweißtransformator (4) zugekehrten Seite der Schweißebene (E-E) nach Demontage des die Schweißebene durchsetzenden Verbindungsstückes (20) mittels des flexiblen Leiters (10′) mit einem einer Nachbarelektrode auf der gleichen Seite der Schweißebene (E-E) zugeordneten Stromabnehmer (5) einer Stromschiene (2) verbindbar ist.

6. Schweißmaschine nach den Ansprüchen 1 bis 5, dadurch gekennzeichnet, daß alle Elektroden (8) auf der einen Seite der Schweißebene (E-E) zwecks Öffnung des Elektrodenspaltes und Justierung desselben und alle Elektroden (7) auf der gegenüberliegenden Seite der Schweißebene zwecks Öffnung des Elektrodenspaltes und Erzeugung des Schweißdruckes in Richtung senkrecht zur Schweißebene verstellbar sind.

7. Schweißmaschine nach Anspruch 6, dadurch gekennzeichnet, daß der Schweißtransformator (4) und die ihm zugeordneten Stromschienen (2) unterhalb der Schweißebene (E-E) angeordnet sind und daß zur Grundeinstellung der Elektroden (7, 8) auf eine vorbestimmte Schweißgutdicke ein die Elektroden (8) bzw. Elektrodenhalter (16) oberhalb der Schweißebene (E-E) tragender Elektrodenbalken (17), vorzugsweise mittels eines Exzenters (36), verstellbar ist.

8. Schweißmaschine nach Anspruch 7, dadurch gekennzeichnet, daß der obere Elektrodenbalken (17) bei jedem Vorschubschritt der Maschine anhebbar und vorzugsweise die Elektroden (7) unterhalb der Schweißebene (E-E) gleichzeitig absenkbar sind.

9. Schweißmaschine nach Anspruch 7 oder 8, dadurch gekennzeichnet, daß die Elektroden (7) unterhalb der Schweißebene (E-E) zur Öffnung des Elektrodenspaltes und zur Erzielung des erforderlichen Schweißdruckes durch zugeordnete Hydraulikzylinder (11) beaufschlagbar sind.

10. Schweißmaschine nach einem der Ansprüche 1 bis 9, dadurch gekennzeichnet, daß sie mit zumindest einem Magazin (22) für abgelängte Längsdrähte (L) oder mit zumindest einem Magazin für vorbereitete Rahmen ausgestattet ist.

11. Schweißmaschine nach einem der Ansprüche 2 bis 10, dadurch gekennzeichnet, daß die Elektrodenhalter (9) einer der beiden Reihen von Elektroden (7) oder die paarweise gekuppelten Elektrodenhalter (9, 16) auf einer in Querrichtung der Maschine verlaufenden Fahrschiene (13) verfahrbar abgestützt sind.

12. Schweißmaschine nach Anspruch 11, dadurch gekennzeichnet, daß zwei parallele Schienen (13) vorgesehen sind und daß in Querrichtung einander benachbarte Elektrodenhalter (9) abwechselnd auf einer der Schienen (13) verfahrbar sind.

## Claims

1. Multiple spot welding machine operating by the electrical resistance method for producing grids or bar grates, having a transverse row of electrodes (7, 8) on each of the two sides of the welding plane (E-E) and at least one welding transformer (4) on one side of said plane, electrically conductive connections (20) which pass through the welding plane being provided from the welding transformer (4) to the electrodes (8) located on the side of the welding plane remote therefrom and it being possible to make single spot welding paths or double spot welding paths selectively through the electrodes (7, 8), the supply line (10) from the welding transformer (4) respectively to one of the two electrodes (7) included by the current bridge (30) in a double spot welding path being reversible on the side of the welding plane facing the welding transformer, characterised in that in order to change over from single spot welding to double spot welding the electrically conductive connections (20) which pass through the welding plane (E-E) are demountable and selected electrodes (8) on the side of the welding plane remote from the welding transformer (4) are connectable in pairs by current bridges (30).

2. Welding machine according to Claim 1, having electrode holders slidable to vary the pitch of the longitudinal wires in the transverse direction of the machine, characterized in that electrode holders (9, 16) which support electrodes (7, 8) cooperating in pairs on both sides of the welding plane (E-E) can be coupled mechanically for common adjustment, preferably by a frictional engagement generated by a lowering of the upper electrode (8) onto the lower electrode (7) and/or of a coupling element (32), one (16) of the two electrode holders (9, 16) of each electrode pair (7, 8) comprising a demountable connecting piece (20) which passes through the welding plane (E-E).

3. Welding machine according to Claims 1 and 2, characterized in that the demountable connecting pieces (20) have a rigid construction and are connected to the associated electrodes (8) on the one hand, and each through a flexible conductor (21) to associated current collectors (5) of a bus-bar (2) on the other hand.

4. Welding machine according to Claims 1 to 3, characterized in that the electrodes (7) arranged on the same side of the welding plane (E-E) as the welding transformer (4) are also connected each by means of a flexible conductor (10) to associated current collectors (6) of a bus-bar (2).

5. Welding machine according to Claims 3 and 4, characterized in that after the connecting piece (20) which passes through the welding plane is demounted, each electrode (7') on the side of the welding plane (E-E) facing the welding transformer (4) is connectable by means of the flexible conductor (10') to a current collector (5) of a bus-bar (2) which is associated with an adjacent electrode on the same side of the welding plane (E-E).

6. Welding machine according to Claims 1 to 5, characterized in that all the electrodes (8) on the one side of the welding plane (E-E) are adjustable in a direction at right angles to the welding plane in order to open the electrode gap and adjust the latter, and all the electrodes (7) on the opposite side of the welding plane are adjustable in a direction at right angles to the welding plane in order to open the welding gap and to generate the welding pressure.

7. Welding machine according to Claim 6, characterised in that the welding transformer (4) and the busbars (2) associated with it are arranged below the welding plane (E-E), and that an electrode beam (17) which supports the electrodes (8) and/or electrode holders (16) above the welding plane (E-E) is adjustable, preferably by means of an eccentric (36), for the basic adjustment of the electrodes (7, 8) to a predetermined material thickness.

8. Welding machine according to Claim 7, characterized in that the upper electrode beam (17) is raisable at each feed step of the machine and the electrodes (7) are preferably simultaneously lowerable below the welding plane (E-E).

9. Welding machine according to Claim 7 or 8, characterised in that the electrodes (7) below the welding plane (E-E) are stressable by associated hydraulic cylinders (11) in order to open the electrode gap and to obtain the required welding pressure.

10. Welding machine according to one of Claims 1 to 9, characterized in that it is equipped with at least one magazine (22) for longitudinal wires (L) cut to length or with at least one magazine for prepared frames.

11. Welding machine according to one of Claims 2 to 10, characterised in that the electrode holders (9) of one of the two rows of electrodes (7) or the electrode holders (9, 16) coupled in pairs are mounted transportably on a rail (13) oriented in the transverse direction of the machine.

12. Welding machine according to Claim 11, characterised in that two parallel rails (13) are provided and that electrode holders (9) adjacent to each other in the transverse direction are alternately transportable on one of the rails (13).

## Revendications

1. Soudeuse par points multiples fonctionnant suivant le procédé par résistance électrique pour la fabrication de treillis ou de grillages comprenant une rangée transversale d'électrodes (7, 8) des deux côtés du plan de soudage (E-E) et au moins un transformateur de soudage (4) d'un côté de ce plan, des connexions conductrices électriques (20) traversant le plan de soudage étant prévues entre le transformateur de soudage (4) et les électrodes (8) situées du côté du plan de soudage opposé au transformateur et des intervalles de soudage par points individuels ou par points doubles pouvant être réalisés au choix au moyen des électrodes (7, 8), le conducteur d'alimentation (10) allant du transformateur de soudage (4) chaque fois à l'une des deux électrodes (7) incluses par les ponts conducteurs (30) dans un intervalle de soudage par points doubles pouvant subir une inversion de polarité du côté du plan de soudage orienté vers le transformateur de soudage, caractérisée en ce qu'en vue du passage du soudage par points individuels au soudage par points doubles, les connexions conductrices électriques (20) traversant le plan de soudage (E-E) sont démontables et des électrodes (8) choisies du côté du plan de soudage opposé au transformateur de soudage (4) peuvent être connectées par paires par des ponts conducteurs de courant (30).

2. Soudeuse suivant la revendication 1, comportant des porte-électrodes déplaçables dans le sens transversal de la machine pour modifier la répartition des fils longitudinaux, caractérisée en ce que des porte-électrodes (9, 16) supportant des électrodes (7, 8) coopérant par paires des deux côtés du plan de soudage (E-E) peuvent, en vue d'un ajustement commun, être accouplés mécaniquement, de préférence par une liaison à friction obtenue par abaissement de l'électrode supérieure (8) sur l'électrode inférieure (7) et/ou par l'intermédiaire d'un élément d'accouplement (32), l'un (16) des deux porte-électrodes (9, 16) de chaque paires d'électrodes (7, 8) comprenant un organe de liaison (20) démontable traversant le plan de soudage (E-E).

3. Soudeuse suivant les revendications 1 et 2, caractérisée en ce que les organes de liaison démontables (20) sont de configuration rigide et sont connectés, d'une part, aux électrodes (8) associées et, d'autre part, chaque fois par l'intermédiaire d'un conducteur flexible (21), à des collecteurs de courant (5) associés, d'une barre omnibus (2).

4. Soudeuse suivant les revendications 1 à 3, caractérisée en ce que les électrodes (7) situées du même côté du plan de soudage (E-E) que le transformateur de soudage (4) sont également connectées chaque fois au moyen d'un conducteur flexible (10) à des collecteurs de courant (6) associés, d'une barre omnibus (2).

5. Soudeuse suivant les revendications 3 et 4, caractérisée en ce que chaque électrode (7') située du côté du plan de soudage (E-E) qui est orienté vers le transformateur de soudage (4) peut, après démontage de l'organe de liaison (20) traversant le plan de soudage, être connectée au moyen du conducteur flexible (10') à un collecteur de courant (5) d'une barre omnibus (2) qui est associée à une électrode voisine située du même côté du plan de soudage (E-E).

6. Soudeuse suivant les revendications 1 à 5, caractérisée en ce que toutes les électrodes (8) situées d'un premier côté du plan de soudage (E-E) sont déplaçables perpendiculairement au plan de soudage en vue d'ouvrir et d'ajuster l'écartement des électrodes et que toutes les électrodes (7) situées du côté opposé du plan de soudage sont également déplaçables perpendiculairement à ce plan de soudage en vue d'ouvrir l'écartement des électrodes et de produire la pression de soudage.

7. Soudeuse suivant la revendication 6, caractérisée en ce que le transformateur de soudage (4) et les barres omnibus (2) qui y sont associées, sont disposés au-dessous du plan de soudage (E-E) et qu'en vue de l'ajustement de base des électrodes (7, 8) sur une épaisseur prédéterminée de matière à souder, une poutre à électrodes (17) supportant les électrodes (8) ou les porte-électrodes (16) au-dessus du plan de soudage (E-E) est déplaçable de préférence au moyen d'un dispositif excentrique (36).

8. Soudeuse suivant la revendication 7, caractérisée en ce qu'à chaque pas de progression de la machine, la poutre à électrodes supérieure (17) peut être soulevée et les électrodes (7) situées au-dessous du plan de soudage (E-E) peuvent de préférence être simultanément abaissées.

9. Soudeuse suivant la revendication 7 ou 8, caractérisée en ce qu'en vue d'ouvrir l'écartement des électrodes et d'obtenir la pression de soudage nécessaire, les électrodes (7) situées au-dessous du plan de soudage (E-E) peuvent être sollicitées par un vérin hydraulique (11) associé.

10. Soudeuse suivant l'une quelconque des revendications 1 à 9, caractérisée en ce qu'elle est équipée d'au moins un magasin (22) pour des fils longitudinaux (L) coupés à longueur ou d'au moins un magasin pour des cadres préparés.

11. Soudeuse suivant l'une quelconque des revendications 2 à 10, caractérisée en ce que les porte-électrodes (9) de l'une des deux rangées d'électrodes (7) ou les porte-électrodes (9, 16) couplés par paires sont supportés de manière à pouvoir être déplacés sur un rail de guidage (13) s'étendant dans le sens transversal de la machine.

12. Soudeuse suivant la revendication 11, caractérisée en ce que deux rails (13) parallèles sont prévus et que des porte-électrodes (9) voisins dans le sens transversal sont déplaçables en alternance sur un des deux rails (13) et sur l'autre.
